# EUROPÄISCHE PATENTANMELDUNG

(11) **EP 3 605 377 A1**
(43) Veröffentlichungstag der Anmeldung: **05.02.2020**
(21) Anmeldenummer: 18186855.5
(22) Anmeldetag: 01.08.2018
(51) Int. Cl.: G06F 21/62, G06Q 10/00

(54) **COMPUTERIMPLEMENTIERTES VERFAHREN UND SYSTEM ZUM BEREITSTELLEN EINER AUS BLOCKCHAINS ZUSAMMENGESETZTEN HIERARCHISCHEN BLOCKCHAIN**

(71) Anmelder: Siemens Aktiengesellschaft, 80333 München (DE)
(72) Erfinder: Klein, Wolfram, 85579 Neubiberg (DE); Mayer, Hermann Georg, 83209 Prien am Chiemsee (DE); Schenk, Tim, 84034 Landshut (DE); Wehrstedt, Jan Christoph, 81829 München (DE); Weinert, Nils, 80798 München (DE)

(57) **Zusammenfassung**

Zusammenfassend betrifft die Erfindung ein computerimplementiertes Verfahren zum Bereitstellen einer aus Blockchains zusammengesetzten hierarchischen Blockchain für Datenverarbeitungssysteme, welche in einem Netzwerk miteinander verbunden sind, mit einem Schritt zum Empfangen wenigstens eines Datensatzes von einem der in dem Netzwerk verbundenen Datenverarbeitungssysteme, wobei der empfangene Datensatz mittels einer zugehörigen Blockchain verwaltet wird. Ferner umfasst das Verfahren ein Erstellen eines Verschlüsselungscodes für den empfangenen Datensatz. Weiterhin umfasst das Aktualisieren der hierarchischen Blockchain durch Einfügen des erstellten Verschlüsselungscodes in die hierarchischen Blockchain. Weiterhin betrifft die Erfindung ein System zum Bereitstellen einer aus Blockchains zusammengesetzten hierarchischen Blockchain.

## Beschreibung

Die vorliegende Erfindung betrifft ein computerimplementiertes Verfahren und ein System zum Bereitstellen einer aus Blockchains zusammengesetzten hierarchischen Blockchain.

### Stand der Technik

In einem System-Modell kann festgestellt werden, wer Eigenschaften von Teilsystemen in einem System-Modell erstellt oder geändert hat. Dies ist insbesondere dann von Bedeutung, wenn sich eine Eigenschaft oder mehrere Eigenschaften der Teilsysteme auf Eigenschaften des Gesamtsystems auswirken. Dabei übernehmen die jeweiligen Ersteller der Teilsysteme die Verantwortung für ihr Teilsystem. Diese Verantwortung kann je nach Branche und Anwendung von dem Designentwurf beginnend, sich über die Entwicklung bis zur Produktion/Auslieferung eines Produktes, Software oder Dienstleistung erstrecken und darüber hinaus, sowie weitere mit diesen Verantwortungsbereichen zusammenhängende Schritte umfassen. Für die Komponenten die aus zugehörigen Teilsystemen integriert werden, übernimmt ein sogenannter Integrator die Verantwortung. Ein Integrator hat hierbei eine weit umfassendere Sicht auf das Teilsystem und ist somit mit weitreichenden Befugnissen ausgestattet. Dies setzt sich fort bis zum Integrator des Gesamtsystems bestehend aus einer Vielzahl an Teilsystemen. Ein Gesamtsystem kann hierbei der Bau einer Infrastruktur, einer industriellen Anlage, eines Fahrzeugs, Entwicklung von Software, Bereitstellen einer Dienstleistung usw., bestehend aus verschiedenen Teilsystemen umfassen. Hierbei tritt das Problem auf, dass es während des Baus oder der Produktion/Bereitstellung oder nach der Fertigstellung während des Betriebs oder der Nutzung die Fragstellung aufkommt, welcher Ersteller für welche Eigenschaften in dem Gesamtsystem verantwortlich ist. Zudem kann oft nicht nachvollzogen werden, welche Eigenschaft eines Teilsystems, beispielsweise beim Auftreten eines qualitativen Mangels in einem Teilsystem, zu einem Mangel in dem eigentlichen Gesamtsystem geführt hat.

Bekannte Lösungen umfassen vertragliche Vereinbarungen, durch welche die Eigenschaften und ihre Beziehungen zueinander definiert sind. Ein Vertrag kommt dabei in erster Linie zwischen einem Endkunden und dem obersten Integrator, beispielsweise einem Generalunternehmer, zustande. Dieser schließt wiederum Verträge mit weiteren Erstellern der nächsten Ebene (Teilsysteme) ab usw., bis schließlich ein Vertrag mit einem Komponentenersteller zustande kommt. Hierbei kann der Fall eintreten, dass dabei zugesicherte Eigenschaften durch die Vielzahl an Hierarchie-Ebenen verloren gehen, oder unklar formuliert sind, so dass bereits während der Beauftragung Missverständnisse auftreten, die im weiteren Verlauf zu Fehlern führen. Des Weiteren ist für einen Endkunden meist schlecht, bis gar nicht ersichtlich, welcher Ersteller die Verantwortung für die Fertigstellung eines bestimmten Teilsystems übernimmt. Die Absicherung über eine für jeden Beteiligten vertrauenswürdige Instanz, beispielsweise einem Notar, ist in der Regel nur auf einer abstrakten Ebene möglich und greift meist nicht bis zum untersten Ende der Lieferkette durch.

Weiterhin ergibt sich für Ersteller eines Teilsystems oder einer Komponente oft die Schwierigkeit, die von ihm erbrachte Leistung umfassend eine Komponente/Teilsystem eines übergeordneten Systems als fertiggestellt abgenommen zu bekommen, sofern noch andere Teilsysteme fehlen, um das Gesamtsystem vollständig fertigzustellen.

Die genannten Schwierigkeiten können zudem oft zeitaufwendige Problem- und Fehlersuche und/oder Nacharbeiten in den jeweiligen Teilsystemen der technischen Gesamtsysteme nach sich ziehen, die durch eine fortlaufende und durchgehend nachweisbare Dokumentation der zugesicherten Eigenschaften eines jeden Beteiligten vermieden werden könnten.

Es besteht daher ein Bedarf nach einem computerimplementierten Verfahren zum Bereitstellen einer aus Blockchains zusammengesetzten hierarchischen Blockchain.

Insbesondere besteht ein Bedarf an einem System zum Bereitstellen einer aus Blockchains zusammengesetzten hierarchischen Blockchain.

Demnach schafft die Erfindung ein computerimplementiertes Verfahren zum Bereitstellen einer aus Blockchains zusammengesetzten hierarchischen Blockchain für Datenverarbeitungssysteme, welche in einem Netzwerk miteinander verbunden sind, mit einem Schritt zum Empfangen wenigstens eines Datensatzes von einem der in dem Netzwerk verbundenen Datenverarbeitungssysteme, wobei der empfangene Datensatz mittels einer zugehörigen Blockchain verwaltet wird. Ferner umfasst das Verfahren ein Erstellen eines Verschlüsselungscodes für den empfangenen Datensatz. Weiterhin umfasst das Aktualisieren der hierarchischen Blockchain durch Einfügen des erstellten Verschlüsselungscodes in die hierarchischen Blockchain.

Dabei ist unter einer Blockchain (Blockkette) eine kontinuierlich erweiterbare Liste von Datensätzen zu verstehen, welche mittels eines kryptografischen Verfahrens miteinander verkettet sind. Jeder Datensatz beinhaltet dabei einen kryptografisch sicheren Hash (Streuwert) des vorhergehenden Datensatzes. Somit wird die Sicherheit und Nichtveränderbarkeit der Datensätze und somit der Blockchain im Ganzen gewährleistet und zugesichert.

Hierbei umfassen Datenverarbeitungssysteme Geräte, insbesondere Computer, Handhelds, Server, Geräte mit Mikrokontroller und Speicher, Geräte im industriellen Umfeld, beispielsweise Automatisierungs- und Steuerungstechnik, Robotik oder produzierende Maschinen, welche in dem Netzwerk miteinander verbunden sind. Diese beispielhafte Auflistung stellt keine für sich abschließende Auflistung dar. Vielmehr sind noch weitere nicht genannte Geräte, welche in industriellen Anwendungen Verwendung finden und die mit einem Netzwerk verbunden werden können, zu der beispielhaften Auflistung zu ergänzen.

Datensätze können Daten mit einem unterschiedlichen Detailierungsgrad und unterschiedlichen Versionen umfassen. Daten stellen dabei die zugesicherten Eigenschaften einer Komponente eines Teilsystems, als kleinste Einheit oder eines Teilsystems dar. Die Daten mit einem unterschiedliche Detailierungsgrad, beispielsweise LOD1, LOD2, LOD3 (LOD - Level of Detail) werden mit zunehmender Nummerierung in der beispielhaften Ausführung detaillierter. In einer weiteren Ausführungsform ist auch eine entgegengesetzte Nummerierung möglich. Zudem sind die Datensätze mittels einer Blockchain geschützt. Dies ist durch den Aufbau der Blockchain gewährleistet, da eine erfolgte Änderungen an Daten im Datensatz auf bestehende Daten im Datensatz aufbaut und diese als korrekt bestätigen.

Weiterhin schafft die Erfindung gemäß einem weiteren Aspekt ein System umfassend eine Vielzahl von Datenverarbeitungssystemen, wobei die Datenverarbeitungssysteme in einem Netzwerk miteinander verbunden sind, zum Bereitstellen einer aus Blockchains zusammengesetzten hierarchischen Blockchain. Die Vielzahl der Datenverarbeitungssysteme umfassen zumindest eine Schnittstelle, welche dazu ausgebildet ist, wenigstens einen Datensatz von einem der in dem Netzwerk verbundenen Datenverarbeitungssysteme zu empfangen.

Ferner umfasst das System zumindest eine Prozessoreinheit, welche dazu ausgebildet ist, die empfangenen Datensätze mittels einer zugehörigen Blockchain zu verwalten. Die Prozessoreinheit ist ferner dazu ausgebildet, einen Verschlüsselungscode für den empfangenen Datensatz zu erstellen und die hierarchischen Blockchain durch Einfügen des erstellten Verschlüsselungscodes in die hierarchischen Blockchain zu aktualisieren.

Weiterhin umfasst das System zumindest eine Speichereinheit, welche dazu ausgebildet ist, eine hierarchische Blockchain zu speichern.

Ferner ist gemäß einem weiteren Aspekt der Erfindung ein Computerprogrammprodukt mit einem auf einem maschinenlesbaren Träger gespeicherten Programmcode zur Durchführung eines Verfahrens gemäß der vorliegenden Erfindung vorgesehen.

Der vorliegenden Erfindung liegt die Kenntnis zugrunde, das verschiedene Datensätze von unterschiedlichen Erstellern gesichert durch eine Blockchain über mehrere Hierarchiestufen zu einer hierarchischen Blockchain auf einer höheren Ebene kombiniert werden können. Somit können die Datensätze auf einer höheren Ebene mit einem einheitlichen System weiterverfolgt und administriert werden.

Vorteilhafterweise kann mittels einer hierarchischen Blockchain der administrative und technische Aufwand zur Verwaltung der Datensätze der verschiedenen Teilsysteme verringert werden. Durch die hierarchische Anordnung einer Blockchain mit einzelnen Blockchains umfassend die Datensätze, kann genau nachvollzogen werden, wer für welches Teilsystem und die damit verbundenen Eigenschaften verantwortlich ist. Durch die hierarchische Blockchain ist beispielsweise ersichtlich, welcher Ersteller welchen Anteil an der Erzeugung oder Verantwortung für eine bestimmte Eigenschaft hat. Vorteilhafterweise können hierdurch gezielt technische Eigenschaften von Teilsystem verbessert werden.

Des Weiteren wird eine verbesserte Übersicht und Verwertbarkeit der Datensätze gewährt, insbesondere bei dem Vorhandensein mehrerer und unterschiedlicher Versionen von Komponenten und/oder Teilsysteme mit unterschiedlichen Eigenschaften. Der hierarchischen Blockchain ist zu entnehmen, welche Komponente und/oder Teilsystem mit welcher Eigenschaft in der übergelagerten Ebene verwendet wurde. Zudem ist die in der Blockchain hinterlegte Version durch den Ersteller nicht mehr veränderbar, wodurch eine lückenlose Nachverfolgung ermöglicht wird.

In vorteilhafter Weise ist erkannt worden, dass eine aus zugehörigen Blockchains aufgebaute hierarchische Blockchain den benötigten Speicheraufwand und Speicherplatz zum Ablegen der Datensätze und der damit verbundenen Verlinkung gegenüber bekannten Blockchainverfahren reduziert. Dies ergibt sich durch die hierarchische bzw. baumähnliche Strukturierung, wodurch bei dem Erstellen einer neuen Version eines Teilsystems nicht die vollständige Blockchain erneut gespeichert werden muss, sondern nur das einzelne Teilsystem. Erst nach einem Abschluss der Bearbeitung eines Teilsystems, wird die zugehörige Blockchain in die hierarchische Blockchain eingefügt. Somit muss nicht mit jeder neuen Version, durch beispielsweise geringfügige Änderungen in einem Teilsystem, die Blockchain dieses Teilsystems in die hierarchische Blockchain eingefügt werden. Vorteilhafterweise wird somit der Speicherplatz zum Speichern der hierarchische Blockchain reduziert und die benötigte Zugriffzeit auf die hierarchische Blockchain verringert. Das Einfügen kann durch einen Integrator durchgeführt werden.

Vorteilhafterweise wird durch eine reduzierte Dateigröße der gespeicherten hierarchischen Blockchain die Zugriffzeit verbessert und es ist ein geringerer Aufwand an Rechenleistung notwendig, um beispielsweise neue Verschlüsselungscodes zu errechnen bzw. die hierarchische Blockchain zu berechnen.

Weiterhin vorteilhaft ist, dass hochdetaillierte Daten eines Teilsystems innerhalb der Blockchain verschlüsselt werden können. Somit wird an die nächste Ebene nur eine grobe Beschreibung des Teilsystems übermittelt, womit die nächste Ebene bzw. der Integrator arbeiten kann. Ein Know-how Verlust kann damit vermieden werden.

Weiterhin vorteilhaft ist, dass jeder Ersteller seine Datensätze des zugehörigen Teilsystems durch die Verwendung einer Blockchain absichert, womit die einzelnen Ersteller voneinander unabhängig sind und kein einzelner Ersteller das Gesamtsystem kompromittieren kann, in dem er die Blockchain ändert. Die Struktur kann somit nicht verändert werden.

Weiterhin vorteilhaft ist, dass durch die Übergabe und Freigabe der Blockchain eines Teilsystems und der damit verbundenen Datensätze mit Detaillierungsgrad eine Zusicherung und Gewährleistung der geforderten Eigenschaften und somit der technischen Funktionalität erfolgt.

Weitere Merkmale und Vorteile der Erfindung sind in den Unteransprüchen beschrieben.

Gemäß einer Ausführungsform umfasst der Datensatz eine Vielzahl von Daten, die einen unterschiedlichen Detailierungsgrad aufweisen.

Vorteilhafterweise können die in einem Datensatz abgelegten Daten Eigenschaften einer Komponente oder eines Teilsystems in einem unterschiedlichen Detailierungsgrad wiedergeben, so dass beispielsweise bei Abstufung weitere Details über eine Eigenschaft der Komponente/Teilsystems zur Verfügung gestellt werden können. Zudem können die Daten, insbesondere detailliert ausgeführte Daten separat geschützt werden, so dass diese Daten für die nächst höhere Ebene nicht einsehbar sind und ein eventueller Knowhow-Verlust vermieden wird.

Gemäß einer Ausführungsform umfasst der Datensatz eine Datensatzversion, die durch die zugehörige Blockchain verwaltet wird.

Vorteilhafterweise können von einem Teilsystem oder dessen Eigenschaften neue und/oder weitere Versionen in Form von Erweiterungen und/oder Verbesserungen mittels der Blockchain innerhalb des Datensatzes verwaltet werden. Durch die Blockchain wird eine Manipulation des Datensatzes unterbunden. Jede neue Version und somit jeder neue Datensatz sind durch den Verschlüsselungscode aufeinander aufgebaut. Ein weiteres Einfügen eines Datensatzes zwischen zwei bestehenden Datensätzen oder eine Entnahme eines Datensatzes einer Version wird durch das Blockchainverfahren unterbunden.

Gemäß einer Ausführungsform umfasst der Verschlüsselungscode einen Hashwert, insbesondere eine MD5-Hashwert.

In vorteilhafter Weise wird ein Hashwert oder eine MD5 Hashwertsumme von einer Version gebildet, welche zur Integration genutzt wird. Dieser Hashwert oder MD5 Hashwertsumme stellt einen Link auf eine untere Blockchain dar, und wird in die hierarchische Blockchain eingetragen. Es werden somit nicht alle Daten aus den darunterliegenden Blockchains erneut integriert, sondern vielmehr wird nur ein Link zur hierarchischen Blockchain hinzugefügt. Vorteilhafterweise wird der benötigte Speicherplatz zum Speichern der hierarchischen Blockchain minimiert.

In einer weiteren Ausführungsform werden Datensätze mit Daten umfassend einen unterschiedlichen Detailierungsgrad, bei denen keine Verschlüsselung vorliegt, direkt in die übergeordnete Blockchain integriert, so dass die Daten für die nächste Ebene zur Verfügung stehen. Die Daten, die verschlüsselt sind, bzw. im Detail über die integrierten Daten hinausgehen, werden über einen Hashwert oder MD5-Hashwert in die übergeordnete Blockchain verlinkt.

Gemäß einer Ausführungsform sind die im Datensatz mit einem unterschiedlichen Detailierungsgrad enthaltenen Daten separat verschlüsselbar.

Dies hat den Vorteil, dass sensible Daten mit höheren Grad an Details, wenn deren Inhalt nicht für die weitere Verarbeitung in dem Teilsystem/Gesamtsystem notwendig ist, verschlüsselt werden können. Diese Daten sind somit für die übergeordneten Blockchains und deren Ersteller nicht einsehbar. Ein Verlust von Know-how kann verhindert und eine Manipulation unterbunden werden.

Gemäß einer Ausführungsform umfasst die hierarchische Blockchain eine Baumstruktur.

Vorteilhafterweise können mittels einer Baumstruktur Verzweigungen und somit neue Versionen angelegt werden, ohne dabei die vollständige Blockchain erneut in die hierarchische Blockchain zu integrieren. Die Verzweigungen stellen Blockchains dar, welche durch einen Hashwert oder einen MD5-Hashwert verlinkt sind. Diesbezüglich wird eine stetige Reihenfolge eingehalten, welche nicht manipulierbar ist. In dieser Reihenfolge an Blockchains sind nur die Datensätze innerhalb der Blockchains als jeweils neue Versionen veränderbar.

Gemäß einer Ausführungsform wird die hierarchische Blockchain auf einem zentralen Datenverarbeitungssystem des Netzwerks gespeichert.

Gemäß einer Ausführungsform wird die hierarchische Blockchain auf der in dem Netzwerk verbundenen Datenverarbeitungssystemen synchronisiert gespeichert.

Dies hat den Vorteil, dass die hierarchische Blockchain auf verschiedene Datenverarbeitungssysteme synchronisiert gespeichert wird und gegen Beschädigung und/oder Zerstörung bei Verlust eines einzelnen Datenverarbeitungssystems des Netzwerks geschützt ist. Durch eine Verteilung (mehrere gleiche Kopien) auf mehrere Datenverarbeitungssysteme wird ein Totalverlust bei Zerstörung oder Beschädigung vermieden.

Die vorliegende Erfindung wird nachfolgend anhand der in den schematischen Figuren der Zeichnungen angegebenen Ausführungsbeispiele näher erläutert, wobei darauf hingewiesen wird, dass durch diese Beispiele Abwandlungen beziehungsweise Ergänzungen, wie sie sich für den Fachmann unmittelbar ergeben, mit umfasst sind. Darüber hinaus stellen diese Ausführungsbeispiele keine Beschränkungen der Erfindung in der Art dar, dass Abwandlungen und Ergänzungen im Umfang der vorliegenden Erfindung liegen.

Es zeigen:
- Fig. 1: eine schematische Darstellung eines computerimplementierten Verfahrens zum Bereitstellen einer aus Blockchains zusammengesetzten hierarchischen Block-chain gemäß einer Ausführungsform;
- Fig. 2: eine schematische Darstellung eines Systems mit in einem Netzwerk miteinander verbundener Datenverarbeitungssysteme und ein Datenverarbeitungssystem gemäß einer Ausführungsform.
- Fig. 3: eine schematische Darstellung eines computerlesbaren Speichermediums umfassend ausführbaren Programmcode gemäß einer Ausführungsform;
- Fig. 4: eine schematische Darstellung der Verwendung des Verfahrens gemäß einer Ausführungsform;
- Fig. 5: eine schematische Darstellung der Verwendung des Verfahrens gemäß einer Ausführungsform in einem Building Information Modelling (BIM);
- Fig. 6: eine schematische Darstellung des verwendeten Detailgrades gemäß einer Ausführungsform;
- Fig. 7: eine schematische Darstellung einer hierarchischen Blockchain gemäß einer Ausführungsform.

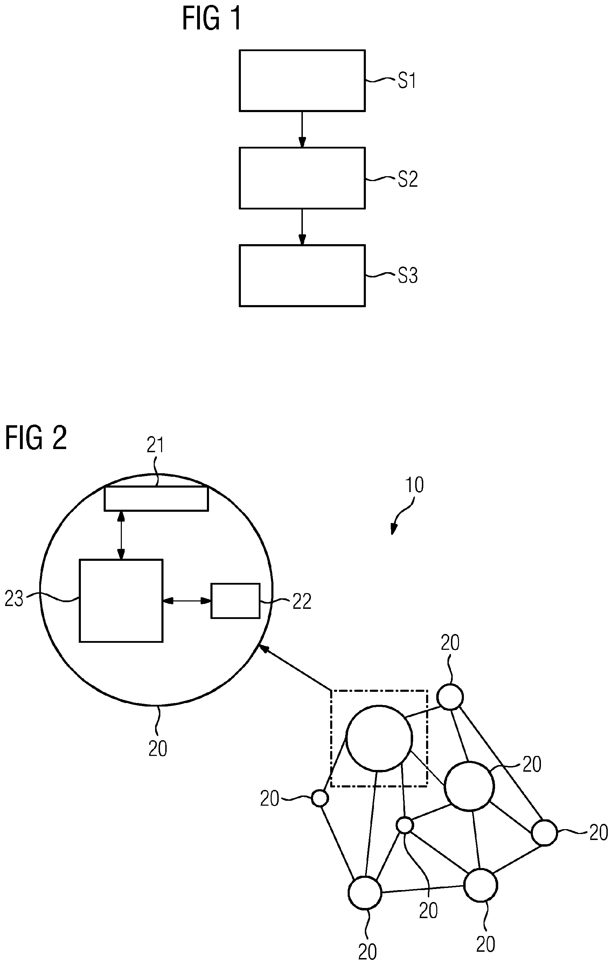

Figur 1 zeigt eine schematische Darstellung eines computerimplementiertes Verfahrens zum Bereitstellen einer aus Blockchain BC zusammengesetzten hierarchischen Blockchain (H-BC) für Datenverarbeitungssysteme 20, welche in einem Netzwerk miteinander verbunden sind. Die Datenverarbeitungssysteme 20 umfassen Geräte, insbesondere Computer, Handhelds, Server, Geräte mit Mikrokontroller und Speicher, Geräte im industriellen Umfeld, beispielsweise Automatisierungs- und Steuerungstechnik, Robotik oder produzierende Maschinen, welche in dem Netzwerk miteinander verbunden sind.

In einem ersten Schritt S1 erfolgt das Empfangen wenigstens eines Datensatzes DS von einem der in dem Netzwerk verbundenen Datenverarbeitungssysteme 20, wobei der empfangene Datensatz DS mittels einer zugehörigen Blockchain BC verwaltet wird.

In einem weiteren Schritt S2 erfolgt das Erstellen eines Verschlüsselungscodes für den empfangenen Datensatz DS.

In einem weiteren Schritt S3 erfolgt das Aktualisieren der hierarchischen Blockchain H-BC durch Einfügen des erstellten Verschlüsselungscodes in die hierarchischen Blockchain H-BC.

In dem Verfahren wird ein Datensatz DS, beispielsweise eines Teilsystems TS empfangen. Die Daten des Datensatzes DS umfassen Eigenschaften des Teilsystems TS, welche einen Detailierungsgrad (LOD) aufweisen können. Ferner können die Daten separat oder im Ganzen verschlüsselt sein. Der Datensatz DS wird durch eine Blockchain BC verwaltet. Somit ist die Historie der Daten in dem Datensatz DS gewährleistet und eine Manipulation wird ausgeschlossen. Der Datensatz DS kann auch eine neue Version V zu einer vorhergehenden Version V darstellen. Durch einen Integrator wird der durch eine Blockchain BC verwaltete Datensatz DS in eine hierarchische Blockchain H-BC integriert. Über den Schlüsselcode wird nur ein Link, der einen Verweis zu der neuen Blockchain BC darstellt, in der hierarchischen Blockchain H-BC abgelegt.

Figur 2 zeigt eine schematische Darstellung eines Systems 10 mit in einem Netzwerk miteinander verbundener Datenverarbeitungssysteme 20 und ein Datenverarbeitungssystem 20 gemäß einer Ausführungsform.

Das System 10 umfasst eine Vielzahl von Datenverarbeitungssystemen 20, wobei die Datenverarbeitungssysteme 20 in einem Netzwerk miteinander verbunden sind.

Dabei ist unter einem Netzwerk ein System zu verstehen, das aus einer Menge von Elementen besteht, wobei die Elemente untereinander mittels Verbindungen verbunden sind.

Das Datenverarbeitungssystem 20 umfasst zumindest eine Schnittstelle 21, welche dazu ausgebildet ist, wenigstens einen Datensatz DS von einem der in dem Netzwerk verbundenen Datenverarbeitungssysteme 20 zu empfangen. Ferner umfassen die Datenverarbeitungssysteme 20 zumindest eine Prozessoreinheit 23, welche dazu ausgebildet ist, die empfangenen Datensätze DS mittels einer zugehörigen Blockchain BC zu verwalten. Weiterhin ist die Prozessoreinheit 23 ausgebildet, einen Verschlüsselungscode für den empfangenen Datensatz zu erstellen und die hierarchischen Blockchain H-BC durch Einfügen des erstellten Verschlüsselungscodes in die hierarchischen Blockchain H-BC zu aktualisieren.

Ferner umfasst ein Datenverarbeitungssystem 20 zumindest eine Speichereinheit 22, welche dazu ausgebildet ist, eine hierarchische Blockchain H-BC zu speichern.

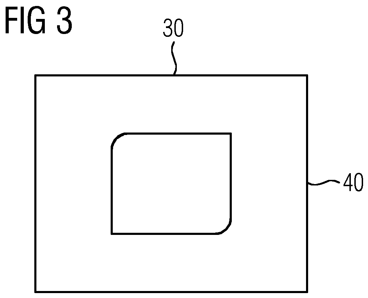

In Figur 3 ist ein computerlesbares Speichermedium 30 dargestellt. Das Speichermedium 30 umfasst einen ausführbaren Programmcode 40, der dazu ausgebildet, wenn ausgeführt, das Verfahren gemäß der vorliegenden Erfindung durchzuführen. Mit dem Programmcode 40 wird die eine aus Blockchains BC zusammengesetzt hierarchische Blockchain H-BC bereitgestellt.

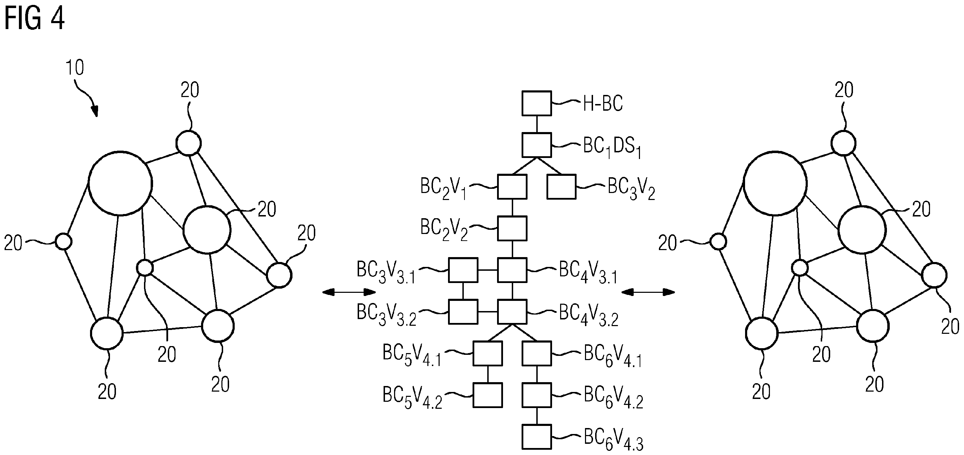

In Figur 4 ist ein System 10 dargestellt. Das System 10 umfasst eine Vielzahl von Datenverarbeitungssystemen 20 (linke Seite der Fig. 4). Die Datenverarbeitungssysteme 20 stellen eine Vielzahl von Datensätzen DS bereit bzw. erzeugen verschiedene Versionen V der Datensätze DS, beispielsweise mittels eines CAD Systems (Computer Aided Design) neue Versionen V von technischen Zeichnungen. Eine Verarbeitung bzw. das Bereitstellen der Datensätze DS kann beispielsweise parallel erfolgen. Diese Datensätze DS werden jeweils in einer einzelnen Blockchain BC verwaltet. Die in Fig. 4 dargestellte Blockchain BC stellt die hierarchische Blockchain H-BC dar. Die hierarchische Blockchain H-BC beinhaltet Daten eines Datensatzes DS₁, der in einer separaten Blockchain BC₁ verwaltet wird. Die hierarchische Blockchain H-BC kann noch weitere Datensätze DS umfassen (nicht dargestellt). Der Datensatz DS₁ umfasst beispielsweise zwei weitere, aber verschiedene Versionen V₁ und V₂ an Datensätzen DS, die durch zwei separate Blockchains BC₂ und BC₃ abgebildet werden.

Dies hat den Vorteil, dass beispielsweise bei einer Entwicklung in eine weitere Richtung, anderes als die zuvor verfolgte Richtung, jeweils beide Entwicklungsrichtungen weiterverfolgt werden können und diese durch eine separate Blockchain BC geschützt sind. Nach Abschluss bzw. während der Entwicklung ist nachvollziehbar, welche Eigenschaften durch den Datensatz DS jeder Version V abgedeckt bzw. erfüllt werden, um somit gegebenenfalls die Sicherheit des Gesamtsystems G-Sys durch frühzeitiges Auffinden möglicher Fehler in einem frühen Entwicklungsstadium zu erhöhen.

Ferner kann die Performance des Gesamtsystems G-Sys durch das Auffinden von Fehlern zu einem frühen Entwicklungsstadium der Entwicklung/Produktion leichter erhalten bzw. verbessert werden.

Zudem kann durch einen Integrator INT der hierarchischen Blockchain H-BC entschieden werden, welche Version BC₂V₁ oder BC₃V₂, beispielsweise in der Entwicklung weiterverfolgt werden und somit in die hierarchische Blockchain H-BC integriert werden soll. Dies hat den Vorteil, dass nur die weiterzuverfolgende Version V der Datensätze DS in die hierarchische Blockchain H-BC integriert werden und somit die Größe der hierarchischen Blockchain H-BC nicht durch nicht weiter zu nutzende Datensätze DS vergrößert wird. Durch die reduzierte Dateigröße der gespeicherten hierarchischen Blockchain H-BC wird die Zugriffzeit verbessert und es ist ein geringerer Aufwand an Rechenleistung notwendig, um beispielsweise neue Verschlüsselungscodes zu errechnen bzw. die hierarchische Blockchain H-BC zu berechnen.

Die Blockchain BC₂V₁ kann weitere Versionen V der Datensätze DS umfassen. Beispielsweise umfasst die Blockchain BC₂ die Versionen der Datensätze BC₂V₂, BC₃V_{3.1} und BC₄V_{3.1}. Die Versionen BC₃V_{3.1} und BC₄V_{3.1} bilden neue Versionen V des Datensatzes DS mit der Version BC₂V₂ ab, die parallel zueinander verlaufen und beispielsweise verschiedene Lösungen verfolgen. Diese Versionen V werden mittels einer neuen Blockchain BC verwaltet. Nach Fertigstellung kann beispielsweise durch einen Integrator INT entschieden werden, welche der beiden Versionen V weiterfolgt werden soll und somit nach die Version BC₂V₂ integriert wird.

Ein vollständiges Integrieren der Blockchain BC₁ in die hierarchische Blockchain H-BC ist zu diesem Zeitpunkt noch nicht notwendig. In vorteilhafter Weise können somit individuelle Entwicklungen und unterschiedliche Weiterentwicklungen verfolgt werden, ohne dabei die gesamte Blockchain BC₁ in die hierarchische Blockchain H-BC integrieren zu müssen. Mittels der separaten Blockchains BC wird weiterhin die Integrität und Korrektheit der einzelnen Datensätze garantiert und gewährt. Nach Beendigung bzw. Fertigstellung, beispielsweise des Datensatzes DS unterhalb der Version BC₂V₂, kann dieser Datensatz DS durch einen Integrator INT in die hierarchische Blockchain H-BC integriert werden. Die hierarchische Blockchain H-BC kann zentral auf einem Datenverarbeitungssystem 20 im Netzwerk oder synchronisiert auf mehreren verschiedenen Datenverarbeitungssystemen 20 im Netzwerk gespeichert werden. Der dargestellte Datensatz DS₁ mit den Versionen V können über beliebig viele Ebenen verwaltet werden und unterschiedliche Blockchains BS umfassen.

Ferner umfasst der Datensatz DS der Version V₃ weitere Datensätze DS der Versionen BC₃V₁ und BC₃V₂. Diese Datensätze DS sind parallele Entwicklungen und werden jeweils durch eine separate Blockchain BC abgebildet. Die Entwicklungen können beispielsweise zueinander unterschiedliche Lösungen verfolgen, wobei der Integrator INT entscheidet, welche Version V in die Blockchain BC₂ erfolgt. Eine Integration in die hierarchische H-BC kann nach dem Abschluss der Entwicklung erfolgen, bzw. wenn ein vorbestimmtes Ziel oder Entwicklungsstand erreicht wurde.

Ferner umfasst der Datensatz DS der Version V₄ weitere Datensätze DS der Versionen BC₅V_{4.1} und BC₆V_{4.1}. Diese Datensätze DS sind parallele Entwicklungen und werden jeweils durch eine separate Blockchain BC abgebildet. Die Entwicklungen können beispielsweise zueinander unterschiedliche Lösungen verfolgen, wobei der Integrator INT entscheidet, welche Version V in die Blockchain BC₄V_{3.2} erfolgt. Eine Integration in die hierarchische H-BC kann nach dem Abschluss der Entwicklung erfolgen, bzw. wenn ein vorbestimmtes Ziel oder Entwicklungsstand erreicht wurde.

In einer weiteren Ausführungsform umfassen die Datenverarbeitungssysteme 20 CAD-Systeme, die über ein Netzwerk mit einander verbunden sind und jeweils in einer Blockchain BC, bzw. in einer hierarchischen Blockchain H-BC verwaltet werden. In der Blockchain BC kann beispielsweise ein Vergütungssystem hinterlegt sein, so dass beispielsweise bei der Verwendung eines CAD Designs der CAD Systeme geregelt ist, welches CAD-System welchen Beitrag zu dem gesamten Design geleistet hat. Durch eine hierarchische Blockchain H-BC ist bei mehreren Erstellern eines CAD Designs sichergestellt, dass der wertschöpfende Beitrag am gesamten CAD Design nachvollziehbar ist und aus dem Beitrag heraus, eine Vergütung erfolgen kann.

In vorteilhafter Weise kann auf den mit dem Netzwerk verbundenen Datenverarbeitungssystem 20 die hierarchische Blockchain H-BC berechnet und gespeichert werden (rechte Seite der Fig. 4).

Zudem kann mittels der hierarchischen Blockchain die einzelne Verantwortung an dem gesamten CAD Design abgebildet werden, womit zurückverfolgt werden kann, an beispielsweise welchen Abschnitt bei der Erstellung des CAD Design Fehler aufgetreten sind.

In einer weiteren Ausführungsform werden durch Ersteller bestimmte Teilsysteme TS für das Erstellen eines Gesamtsystems 10 bereitgestellt. Das bereitgestellte Gesamtsystem 10 kann simuliert gegen eine Steuerung getestet werden. Treten innerhalb der Simulation Fehler und Störungen auf, kann anhand der hierarchischen Blockchain H-BC des Gesamtsystems festgestellt werden, welche implementierte Eigenschaft und von welchem Ersteller den Fehler bzw. die Störung in dem Gesamtsystem 10 verursacht hat.

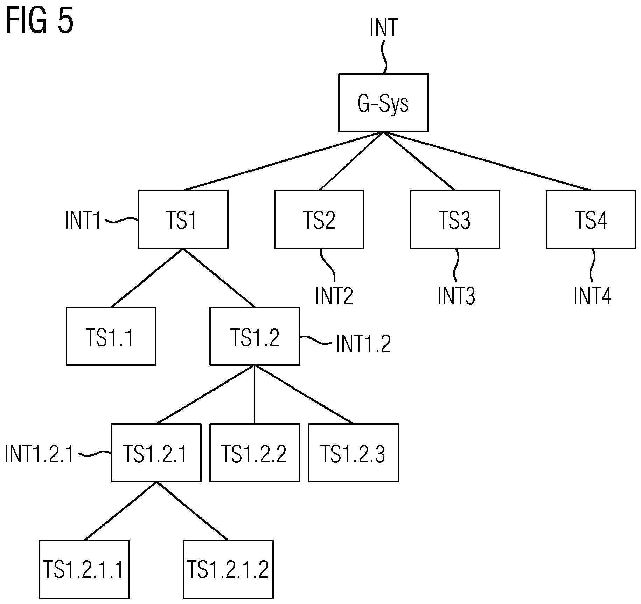

In Figur 5 ist das Zusammenspielspiel verschiedener Ersteller mit ihren Teilsystemen TS anhand eines Building Information Model (BIM) dargestellt. Ähnliche Zusammenhänge ergeben sich auch im Fahrzeugbau, sowie im Produktionsbereich bzw. in der Entwicklung und Simulation.

In Figur 5 ist das Gesamtsystem G-Sys dargestellt. Das Gesamtsystem G-Sys kann durch eine hierarchische Blockchain H-BC abgebildet werden. Ein Integrator INT, beispielsweise ein Generalunternehmer GU, verwaltet die hierarchische Blockchain H-BC des Gesamtsystems G-Sys. Das Gesamtsystem G-Sys umfasst beispielsweise die Teilsysteme TS1 bis TS4. Das Gesamtsystem G-Sys und somit die hierarchische Blockchain H-BC ist dabei nicht auf die dargestellten Teilsysteme TS1 bis TS4 begrenzt. Vielmehr ist denkbar, dass das Gesamtsystem G-Sys und somit die hierarchische Blockchain H-BC noch weitere Teilsysteme TS umfassen kann. Die Teilsysteme TS1 bis TS4 für sich jeweils bilden eine Blockchain BC aus und können nach Beendigung der Teilsysteme TS durch den Integrator INT in die hierarchische Blockchain BC integriert werden. Die Teilsystem TS1 bis TS4 können beispielsweise, gemäß dem BIM, ein Ingenieurbüro X und ein Architekturbüro A umfassen, welche vorbestimmte Eigenschaften für das Gesamtsystem G-Sys bereitstellen. Zudem sind weitere Ersteller gemäß dem BIM denkbar. Das Teilsystem TS1 umfasst die Teilsysteme TS1.1 und TS1.2, die jeweils eine separate Blockchain BC abbilden. Die Blockchains BC der zwei Teilsysteme TS1.1 und TS1.2 können durch einen Integrator INT1 in die übergelagerte Blockchain des Teilsystems TS1 integriert werden. Die Teilsystem TS1.1 und TS1.2 umfassen beispielsweise gemäß BIM den Stahlbau (TS1.1) und HVCA (Heizung-Belüftung-Klimaanlage) (TS1.2).

Der Ersteller des Teilsystems TS1.2 (HVAC - System) kann dabei ein Integrator INT1.2 der untergeordneten Teilsysteme TS1.2.1 (Heizung (H)), TS1.2.2 (Lüftung (V)) und TS1.2.3 (Klimaanlage (AC)) sein. Die Teilsysteme TS1.2.1, TS1.2.2, TS1.2.3 werden jeweils durch eine Blockchain abgebildet. Der Ersteller des Teilsystems TS1.2.1kann dabei wiederum auf verschiedene Alternativen, beispielsweise zur Wärmeerzeugung zurückgreifen. Diese umfassen die Teilsystem TS1.2.1.1 Erdwärme und TS1.2.1.2 Solar. Der Ersteller der Solar-Heizung TS1.2.1.2 ist dabei nur für sein Teilsystem verantwortlich. In einem nachgelagerten Vergütungsmodell erhält der Ersteller der Solar-Heizung TS1.2.1.2 ggf. nur dann eine Vergütung, wenn seine Alternative beim Bau mit diesem Model übernommen wird (der Kunde entscheidet sich für eine Solarheizung TS1.2.1.2 anstatt für Erdwärme TS1.2.1.1). Insbesondere in der Baubranche kann mittels des Verfahrens der vorliegenden Erfindung die Fertigstellung und die Verantwortlichkeit für einzelne Eigenschaften in einem Teilsystem nachverfolgt werden. Alle Ersteller der Teilsysteme TS arbeiten vorteilhafterweise mit einem einheitlichen System, das zur Generierung und Speicherung, insbesondere zu einer verteilten Speicherung von Blockchains BC ausgelegt ist. Diesbezüglich können alle Ersteller den Fortschritt in der Erstellung der Teilsysteme TS als Transaktion / Wertschöpfung in eine Blockchain BC ablegen. Durch die Eigenschaften der Blockchain BC (insbesondere Unveränderlichkeit und verteilte Abspeicherung) kann damit zu einem späteren Zeitpunkt sicher nachgewiesen werden, dass bestimmte Eigenschaften vorhanden waren bzw. dass bestimmte Leistungen erbracht wurden.

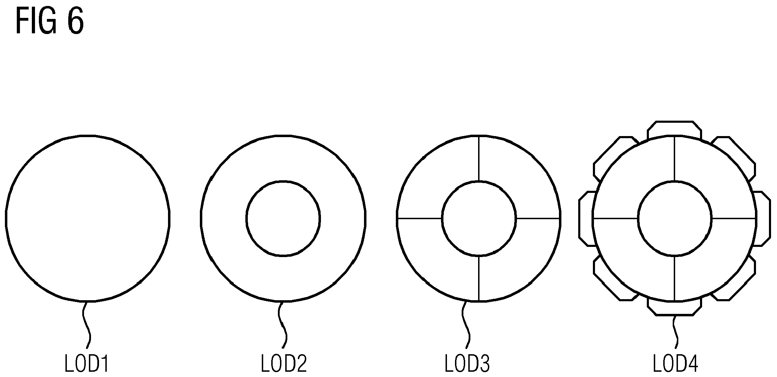

In Figur 6 ist ein beispielhafter Detailierungsgrad eines technischen Teilsystems TS, insbesondere eines Zahnrads dargestellt. Mit der steigenden Anzahl (LOD1 bis LOD4) wird das Zahnrad detaillierter ausgeführt. Mit jedem Detailierungsgrad werden mehr Informationen über beispielsweise die Umsetzung, Implementierung oder Integration offenbart. In dem Detailierungsgrad LOD1 wird eine kreisförmige Scheibe dargestellt. In dem Detailierungsgrad LOD2 wird die kreisförmige Scheibe um eine in die kreisförmige Scheibe zentrische und ebenfalls kreisförmige Öffnung ergänzt. In einem weiteren Detailierungsgrad LOD3 wird die kreisförmige Scheibe um zusätzliche strukturelle Merkmale, beispielsweise Speichen ergänzt. In einem folgenden Detailierungsgrad LOD2 wird die kreisförmige Scheibe am Außenrand der Scheibe um Zähne ergänzt. Das Zahnrad ist im Detailierungsgrad LOD4 vollständig dargestellt und offenbart. Der Detailierungsgrad LOD und die damit verbundene Verschlüsselung stellen einen Schutzmechanismus für die unerlaubte Nutzung des Know-hows dar. Ferner kann eine Anpassung bzw. Veränderung von Daten mittels der Verschlüsselung durch unberechtigte Dritte unterbunden werden. Ein Ersteller gibt somit nur den notwendigen Detailierungsgrad LOD frei, welcher für eine Integration in das entsprechende Teilsystem TS notwendig ist.

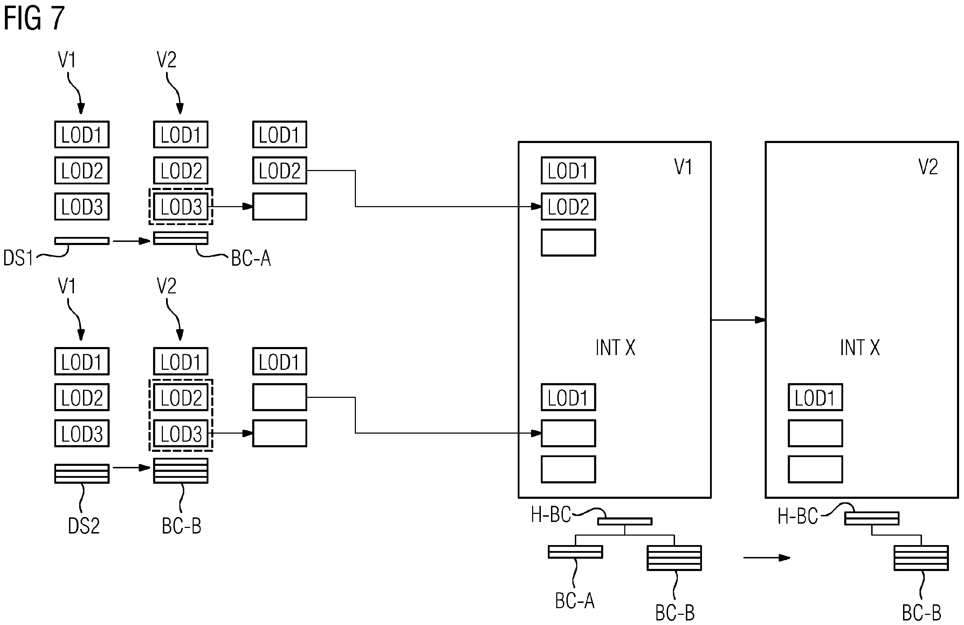

In Figur 7 ist eine schematische Darstellung einer hierarchischen Blockchain H-BC dargestellt.

Die hierarchische Blockchain H-BC wird aus mehreren Blockchains BC gebildet. Die Blockchains BC sichern die Eigenschaften und Leistungen der integrierten Teilsysteme TS ab. Dieser Vorgang kann sich über beliebig viele Ebenen fortsetzen, sodass eine hierarchische Blockchain H-BC das Gesamtsystem G-Sys umfasst. Gemäß Figur 7 erfolgt das Bereitstellen einer aus Blockchains (BC-A, BC-B) zusammengesetzten hierarchischen Blockchain H-BC auf einem Datenverarbeitungssystem 20. Der Integrator INT X der hierarchischen Blockchain H-BC fordert die Datensätze (DS1, DS2) der zu integrierenden Teilsysteme, beispielsweise CAD-Modelle an. Die CAD-Modelle der Teilsysteme TS liegen dabei in einer bestimmten Version V vor, beispielsweise V2, die mittels einer Blockchain BC abgesichert sind. Dies erfolgt durch die Hashwertbildung aus der Binärdarstellung des CAD-Modells. Die zugesicherten Eigenschaften können dabei in unterschiedlichen Detailierungsgrad (Level of Detail LOD) beschrieben sein.

In einer Ausführungsform können die Datensätze DS1 und DS2 des jeweiligen Teilsystems TS entsprechend dem Detailierungsgrad (LOD) verschlüsselt werden. Beispielsweise können die Datensätze DS, die für eine Systemintegration nicht erforderlich sind verschlüsselt werden. Mit Bezug auf Fig. 5 braucht vereinfacht dargestellt, beispielsweise der Integrator INT1.2.1 des Heizsystems TS1.2.1 nur den Stromverbrauch der Erdwärmepumpe kennen und deren Heizleistung und ggf. eine BoundingBox für deren Einbau - die genaue Steuerung der Anlage.

Die technischen Details sind aber aufgrund der Verschlüsselung nicht sichtbar für Dritte. Der Nachweis von zugesicherten Eigenschaften kann von einem Integrator INT X nicht mehr anhand der Detailpläne nachvollzogen werden, sondern wird anhand der Blockchain BC vollzogen. In einem Streitfall kann das Fehlen der Eigenschaft auf den entsprechenden Ersteller zurückgeführt werden. Dieser kann umgekehrt seinen Beitrag zur Gesamtleistung über die hierarchische Blockchain H-BC einfordern. Sobald eine hierarchische Blockchain H-BC wiederum ein Teil einer übergelagerten Blockchain wird, sind die Eigenschaften dort nicht mehr sichtbar, sondern der Integrator INT X stellt nach oben in der Hierarchie ein eigenes Eigenschaftenpaket bereit. Für das Eigenschaftenpaket übernimmt der Integrator INT X wiederum die Verantwortung, welches mittels der Blockchain BC abgesichert wird. Für Integratoren weiter oben in der Hierarchie kann dadurch ein geeignetes Abstraktionsniveau erreicht werden. Die Blockchains BC-A, BC-B der Ersteller weiter unten in der Hierarchie werden aber über ihren Hashwert in die hierarchische Blockchain eingefügt, sodass die für die Integration verwendeten Versionen und Eigenschaften eindeutig bestimmbar sind. Im Streitfall kann daher zweifelsfrei ein Fehler und die Verantwortung bzw. Kosten dafür bis zur entsprechenden Hierarchieebene zurückverfolgt werden. Die Ersteller des Datensätze A und B können daneben unabhängig an neuen Versionen V ihres Modells arbeiten und ihre eigene Blockchain BC fortschreiben. Eine Einbeziehung in ein Gesamtsystem G-Sys erfolgt erst wieder, wenn ein Integrator INT das Modell anfordert und die Blockchain BC in die eigenen hierarchische Blockchain H-BC integriert. Der Verweis auf eine untergeordnete Blockchain kann beim Bilden einer Integrationsversion auch wieder verworfen werden, wenn der Integrator INT sich beispielsweise für ein bestimmtes Teilsystem entschieden hat (beispielsweise Erdwärme TS1.2.1.1 anstatt Solarheizung TS1.2.1.2).

Zusammenfassend betrifft die Erfindung ein computerimplementiertes Verfahren zum Bereitstellen einer aus Blockchains zusammengesetzten hierarchischen Blockchain BC für Datenverarbeitungssysteme, welche in einem Netzwerk miteinander verbunden sind, mit einem Schritt zum Empfangen wenigstens eines Datensatzes von einem der in dem Netzwerk verbundenen Datenverarbeitungssysteme, wobei der empfangene Datensatz mittels einer zugehörigen Blockchain verwaltet wird. Ferner umfasst das Verfahren ein Erstellen eines Verschlüsselungscodes für den empfangenen Datensatz. Weiterhin umfasst das Aktualisieren der hierarchischen Blockchain durch Einfügen des erstellten Verschlüsselungscodes in die hierarchischen Blockchain. Weiterhin betrifft die Erfindung ein System zum Bereitstellen einer aus Blockchains zusammengesetzten hierarchischen Blockchain.

## Patentansprüche

1. Computerimplementiertes Verfahren zum Bereitstellen einer aus Blockchains (BC) zusammengesetzten hierarchischen Blockchain (H-BC) für Datenverarbeitungssysteme (20), welche in einem Netzwerk miteinander verbunden sind, mit den folgenden Schritten:
- Empfangen (S1) wenigstens eines Datensatzes (DS) von einem der in dem Netzwerk verbundenen Datenverarbeitungssysteme (20), wobei der empfangene Datensatz (DS) mittels einer zugehörigen Blockchain (BC) verwaltet wird;
- Erstellen (S2) eines Verschlüsselungscodes für den empfangenen Datensatz (DS);
- Aktualisieren (S3) der hierarchischen Blockchain (H-BC) durch Einfügen des erstellten Verschlüsselungscodes in die hierarchischen Blockchain (H-BC).

2. Computerimplementiertes Verfahren gemäß Anspruch 1, wobei der Datensatz eine Vielzahl von Daten umfasst, die einen unterschiedlichen Detailierungsgrad aufweisen.

3. Computerimplementiertes Verfahren gemäß zumindest einem der vorhergehenden Ansprüche 1 und 2, wobei der Datensatz eine Datensatzversion umfasst, die durch die zugehörige Blockchain (BC) verwaltet wird.

4. Computerimplementiertes Verfahren gemäß zumindest einem der vorhergehenden Ansprüche 1 bis 3, wobei der Verschlüsselungscode einen Hashwert, insbesondere eine MD5-Hashwert, umfasst.

5. Computerimplementiertes Verfahren gemäß Anspruch 4, wobei die im Datensatz (DS) mit einem unterschiedlichen Detailierungsgrad enthaltenen Daten separat verschlüsselbar sind.

6. Computerimplementiertes Verfahren gemäß zumindest einem der vorhergehenden Ansprüche 1 bis 5, wobei die hierarchische Blockchain (H-BC) eine Baumstruktur umfasst.

7. Computerimplementiertes Verfahren gemäß zumindest einem der vorhergehenden Ansprüche 1 bis 6, wobei die hierarchische Blockchain (H-BC) auf einem zentralen Datenverarbeitungssystem (20) des Netzwerks gespeichert wird.

8. Computerimplementiertes Verfahren gemäß zumindest einem der vorhergehenden Ansprüche 1 bis 6, wobei die hierarchische Blockchain (H-BC) auf der in dem Netzwerk verbundenen Datenverarbeitungssystemen synchronisiert gespeichert wird.

9. System (10) umfassend eine Vielzahl von Datenverarbeitungssystemen (20), wobei die Datenverarbeitungssysteme in einem Netzwerk miteinander verbunden sind, zum Bereitstellen einer aus Blockchains (BC) zusammengesetzten hierarchischen Blockchain (H-BC), wobei die Vielzahl der Datenverarbeitungssysteme umfassen:
- zumindest ein Schnittstelle (21), welche dazu ausgebildet ist, wenigstens einen Datensatz (DS) von einem der in dem Netzwerk verbundenen Datenverarbeitungssysteme (20) zu empfangen;
- zumindest eine Prozessoreinheit (23), welche dazu ausgebildet ist, die empfangenen Datensätze (DS) mittels einer zugehörigen Blockchain (BC) zu verwalten, und welche weiter ausgebildet ist,
einen Verschlüsselungscode für den empfangenen Datensatz zu erstellen und
die hierarchischen Blockchain (H-BC) durch Einfügen des erstellten Verschlüsselungscodes in die hierarchischen Blockchain (H-BC) zu aktualisieren;
- zumindest eine Speichereinheit (22), welche dazu ausgebildet ist, die hierarchische Blockchain (H-BC) zu speichern.

10. System gemäß Anspruch 9, wobei der Datensatz (DS) eine Vielzahl von Daten umfasst, die einen unterschiedlichen Detailierungsgrad (LOD) aufweisen.

11. System gemäß zumindest einem der vorhergehenden Ansprüche 9 und 10, wobei der Datensatz (DS) eine Datensatzversion umfasst, die durch die zugehörige Blockchain (BC) verwaltet wird.

12. System gemäß zumindest einem der vorhergehenden Ansprüche 9 bis 11, wobei der Verschlüsselungscode einen Hashwert, insbesondere eine MD5-Hashwert, umfasst.

13. System gemäß Anspruch 12, wobei die im Datensatz (DS) mit einem unterschiedlichen Detailierungsgrad (LOD) enthaltenen Daten separat verschlüsselbar sind.

14. Computerprogrammprodukt mit einem auf einem maschinenlesbaren Träger (30) gespeicherten Programmcode (40) zur Durchführung eines Verfahrens gemäß zumindest einem der Ansprüche 1 bis 8, wenn das Programm auf einem Rechner abläuft.
